# EUROPEAN PATENT APPLICATION

(11) **EP 3 273 391 A1**
(43) Date of publication of application: **24.01.2018**
(21) Application number: 16180452.1
(22) Date of filing: 20.07.2016
(51) Int. Cl.: G06Q 10/00

(54) **A METHOD AND SYSTEM FOR DETERMINING THE SUITABILITY OF A COMPONENT FOR DESIGNATION AS A STANDARD COMPONENT**

(71) Applicant: Airbus Group India Private Limited, Bangalore 560048 (IN)
(72) Inventor: REKAPALLI, Prasant, New Tippasandra, Bangalore, KA 75 (IN)
(74) Representative: LKGLOBAL Lorenz & Kopf PartG mbB Patentanwälte

(57) **Abstract**

A method for of determining the suitability of a component of a machine for designation as a standard component of the machine, comprising the steps of: receiving a request (102) for designation of a component as a standard component, comprising a component specification defining an attribute of the component; comparing (104) an attribute to an attribute of an existing standard component defined by a standard specification stored in a database (300); determining (106) whether an existing standard component is a potential alternative to the component based on the comparison; simulating (202) an impact relating to an implementation of the component and/or an implementation of an existing standard in response to said existing standard component being determined to be a potential alternative; and determining (204) whether the component is suitable for designation as a standard component based on the comparison and/or an impact. A system comprising a database and computer-implemented comparison and simulation engines configured to carry out the method.

## Description

### FIELD

The present application relates to a method and system of determining whether a component is suitable for designation as a standard component, and relates particularly, but not exclusively, to determining whether an aircraft component is suitable for designation as a standard aircraft component.

### BACKGROUND

The attributes of a component, such as an aircraft component, are defined in a specification which may be stored in a spreadsheet, database, or other analogue or digital storage medium. A system may contain any number of these specifications stored across a variety of storage media. A number of these components may be deemed standard components; this determination may be made by a standards analyst or a department.

A request for a component, such as an aircraft component, to be designated as a standard component may come from an external supplier or result from an internal requirement. The request may come about as a result of a new design of an aeroplane or part thereof. It may be that the part is already designated a standard in the system, which can involve duplication of work and redundant data.. Current practice may rely on engineers, designers or analysts checking existing records before proposing or accepting a new part as a standard part..

An amount of rigorous manual work is involved when there is a need for inclusion of a new component in an existing standard component database. The new component must be checked and validated manually or with existing tools.

It would be desirable to provide a tool and process to facilitate a more systematic and accurate evaluation of proposals to incorporate new parts that are not part of the current standards catalogue, thereby enabling management of parts in the manufacturing and maintenance process chain more efficient. Further, it would be desirable to provide a tool and process that ensures that conformance with standardization catalogues is maximized.

### SUMMARY

According to a first aspect of the present invention, there is provided a method of determining the suitability of a component of a machine for designation as a standard component of said machine, the method comprising the steps of:
receiving a request for designation of a component as a standard component, the request comprising a component specification defining at least one attribute of the component;
comparing at least one said attribute to a respective at least one attribute of at least one existing standard component defined by a respective standard specification stored in a database;
determining whether at least one said existing standard component is a potential alternative to said component based on said comparison;
simulating at least one impact relating to an implementation of said component and an implementation of at least one said existing standard component in response to said existing standard component being determined to be a potential alternative; and
determining whether said component is suitable for designation as a standard component based on said comparison and/or at least one said impact.
By providing such a method, the determination of a component as a standard component can be performed with greater precision and consistency.

The method of determining the suitability of a component of a machine for designation as a standard component of said machine may comprise computer implemented steps. The receiving step may comprise receiving an electronic request for designation of a component as a standard component, the request comprising the component specification defining at least one attribute of the component. The electronic request may be received at a computer implemented comparison engine. The electronic request may be entered via a user interface over a network. The user interface may comprise an electronic form that is completed by a user. Alternatively, the electronic request may be received at the computer implemented comparison engine by electronic mail (email). The comparison engine may be configured to analyze the electronic request to extract relevant data for use in the comparison step.

The comparison step may comprise comparing, via a computer implemented comparison engine (or the comparison engine when combined with the features above), at least one said attribute to the respective at least one attribute of at least one existing standard component defined by a respective standard specification stored in a database.

The comparison engine requires access to the database. The access may be over a secure network.

The comparison step may comprise comparing each of a set of attributes defined in the component specification with a corresponding set of attributes defined by the respective standard specification.

The comparison (which may be performed by the computer implemented comparison engine) may comprise carrying out an equivalency analysis (a computer implemented equivalency analysis performed by executing one or more programs with a processor of the comparison engine). According to the equivalency analysis, an attribute by attribute equivalency comparison is performed between the attributes of the component specification with corresponding attributes of the existing standard component. The equivalency analysis may comprise determining whether each attribute of the component specification is within an equivalency tolerance of the corresponding attribute of the existing standard component.

The comparison may comprise comparing parameters representing the attribute, e.g. numerical values. The above described equivalency tolerance may be determined based on a numerical thresholding technique (e.g. upper and lower limit thresholds).

The method may comprise calculating a degree of interchangeability based on the comparison. The degree of interchangeability may combine the equivalency of each compared attribute. The degree of interchangeability may be an interchangeability score representing a combined equivalency score for each compared attribute.

The step of determining may comprise determining, via a computer implemented comparison engine (which may be the comparison engine described above), whether at least one said existing standard component is a potential alternative to said component based on said comparison. Here, a potential alternative is an existing standard component that has been determined by the comparison engine to be a viable alternative to said component.

The method may comprise generating a list of potential alternative components. In particular, the database may comprise performing the comparison step for each of many existing standard components and the determining step may comprise generating a list of potential or viable alternatives to said component based on said comparison. The list of potential alternatives may be constituted by standard components that are determined to be equivalents based on the comparison. The list of potential alternatives may comprise a subset of existing standard components identified as having equivalent attributes to said component based on said comparison.

The step of simulating may comprise simulating, via a simulation engine, at least one impact relating to an implementation of said component and/or an implementation of at least one said existing standard component based on said comparison.

The simulating step may comprise simulating at least one impact by calculating impact metrics of implementing said component as compared to implementing said existing standard component. The impact metrics may comprise supply chain metrics, monetary cost metrics, weight metrics, design metrics and/or volume metrics. The supply chain metrics may include one or more metrics representing a supply chain reliability for said existing standard component. The step of calculating impact metrics may comprise calculating a difference between an impact parameter of said existing standard component and said component. The step of calculating impact metrics may take into account the total number of the component in the machine. The total number of the components can be determined from a database of the machine design.

The simulating step may be performed for each existing component on the list of potential alternatives.

The step of determining whether said component is suitable for designation as a standard component based on the at least one said impact may be a computer implemented step performed by the simulation engine. That is, the simulation engine may determine that the at least one said impact is within a certain tolerance as to be acceptable and responsively determine that the component is not suitable for designation as a standard component. Alternatively, the simulation engine may determine that the at least one said impact is not within the certain tolerance and responsively determine that said component is suitable for designation as a standard component.

The method may comprise adding said component to the database as a standard component in response to determining that said component is suitable for designation as a standard component.

The comparison may only be performed when said component and said at least one existing standard component share at least one classification. That is, the comparison step may comprise applying a filter to the database to select existing standard components of at least one classification corresponding to at least one classification of said component. The method may comprise performing the comparison for each existing standard component of the at least one classification.

The filter ensures non-like components from being compared, thereby increasing the efficiency of the method.

The comparison may comprise a determination of a difference between at least one component attribute and at least one corresponding existing standard component attribute.

A quantitative basis for comparison of the component with the at least one existing standard component is allowed, thereby further increasing the consistency of the method.

The simulation may comprise determining at least one impact score based on said difference. The impact score may be included in the above described impact metrics. The impact score may be determined based on a difference between plural component attributes and plural corresponding existing standard component attributes. For example, the attributes may comprise weight or dimension.

This provides the advantage of providing a clear way of qualifying the consequences of implementing the component.

The method may comprise generating an output of a result of said comparing and/or said simulating to allow determining whether said component is suitable for designation as a standard component based on said comparison and/or at least one said impact. The step of generating an output may be performed by a computer implemented output generator. The output may comprise the impact metrics described above. The output may comprise a quantitative and/or qualitative indication of the at least one impact and/or the degree of interchangeability described above.

The step of generating an output - may comprise the step of generating a report comprising at least one said potential alternative and/or at least one said impact and/or at least one said determination of suitability.

The output provides a tool for an informed decision to be taken as to whether said request should be accepted or a determined potential alternative component should be insisted upon for use in manufacturing the machine..

The simulation may comprise procurement costs associated with said component and/or said existing standard component.

This provides the advantage that the potential cost-related effect of having to procure the component upon its determination as a standard component can be taken into account during the simulation and subsequent determination.

At least one attribute may define at least one of the following: dimension; density; mass; volume; tolerance; material type; material property; surface treatment; pin type; and colour.

Said machine may be an aircraft.

According to a second aspect of the present invention, there is provided a system for determining the suitability of a component of a machine for designation as a standard component of said machine, the system comprising:
a database comprising at least one standard specification defining at least one attribute of at least one respective existing standard component;
a computer-implemented comparison engine configured to carry out the steps of
   receiving a request for designation of a component as a standard component, the request comprising a component specification defining at least one attribute of the component;
   comparing at least one said attribute to a respective at least one attribute of at least one existing standard component defined by a respective standard specification stored in a database;
   determining whether at least one said existing standard component is a potential alternative to said component based on said comparison; and
a computer-implemented simulation engine configured to carry out the steps of
   simulating at least one impact relating to an implementation of said component and an implementation of at least one said existing standard component in response to determining the at least one existing standard component is a potential alternative; and
an output generator configured to output a result of said comparing and/or said simulating to allow determining whether said component is suitable for designation as a standard component based on said comparison and/or at least one said impact.
By providing such a system, determination of a component as a standard component, having greater precision and consistency, can be carried out rapidly.

The computer-implemented comparison engine may be further configured to perform said comparison only when said component and said at least one existing standard component share at least one classification.

The comparison may comprise a determination of a difference between at least one component attribute and at least one corresponding existing standard component attribute.

At least one impact may comprise at least one impact score based on said difference.

Said output generator may be further configured to generate a report comprising at least one said potential alternative and/or at least one said impact and/or at least one said determination of suitability. The output generator may comprise a display unit and/or an electronic mail generator and/or a printer in order to output the result.

Said simulation may comprise procurement costs associated with said component and/or said existing standard component.

At least one attribute may define at least one of the following: dimension; density; mass; volume; tolerance; material type; material property; surface treatment; pin type; and colour. Said machine may be an aircraft.

All of the features described above with respect to the first aspect may be combined with the second aspect.

### BRIEF DESCRIPTION OF THE DRAWINGS

Preferred embodiments of the present disclosure will now be described, by way of example only and not in any limitative sense, with reference to the accompanying drawings, in which:
Figure 1 shows a block diagram of a system according to the present disclosure;
Figure 2 shows a flow diagram describing steps of a method according to an embodiment of the present disclosure;
Figure 3 shows an engineering drawing of an existing standard component in the form of a bolt.

### DETAILED DESCRIPTION

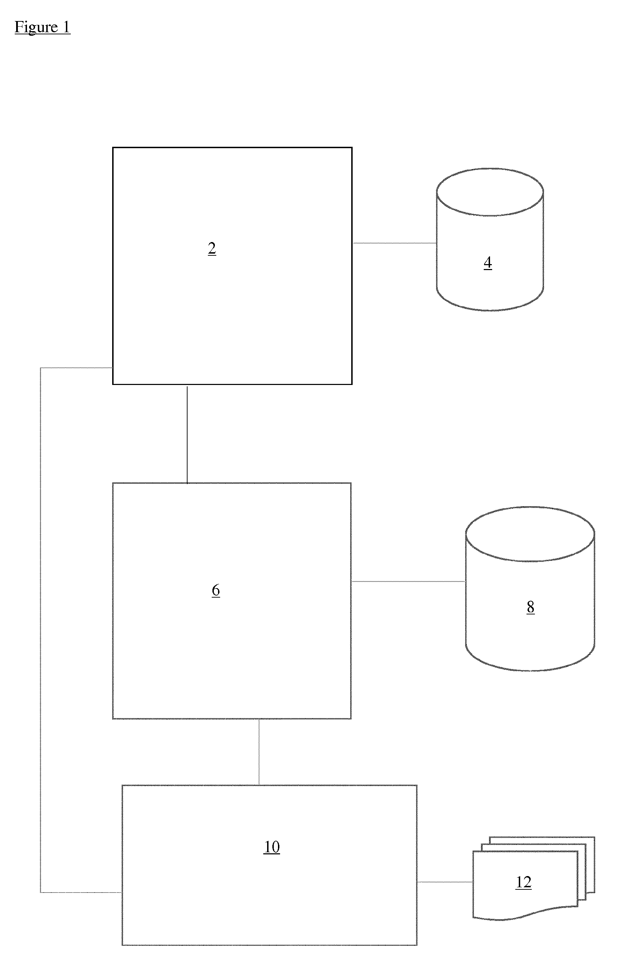

Figure 1 shows an exemplary system according to the present disclosure. The system comprises a comparison engine 2, a simulation engine 6, an output generator 10, one or more standard specification databases and one or more impact databases.

The comparison engine 2 is configured to receive an electronic request for a component to be designated as a standard component. The component of the request can be considered as a new component. The electronic request may comprise a specification of the new component defining various attributes including one or more of weight, dimensions, features, tolerances, materials. The electronic request may also comprise a designation of a particular standards classification. The standards classification may correspond to a number of related components in the standard specifications database 4. The electronic request may be entered through a user interface having a standard electronic form for entering the data of the specification of the new component. Alternatively, the electronic request may be submitted by email. The electronic request can be sent over an internet based network.

The comparison engine 2 is configured to extract data for comparison from the specification for the new component. The data corresponds to plural attributes of the new component. The comparison engine 2 is configured to access the standard specifications database 4 and run a comparison algorithm. Under the comparison algorithm, a standard specification for a standard component is accessed and the data for comparison is extracted corresponding to attributes of the standard component. Using the extracted data from the specification for the new component and the extracted data from the specification for the standard component, the new and standard components are compared attribute by attribute.

The comparison engine 2 compares the attributes of the new and standard components by calculating or determining equivalency of the attributes. The equivalency may be a numerical outcome. So for dimensional attributes or weight attributes, numerical dimensional or weight data for the new component can be subtracted from the standard component. For materials attributes, the materials may need to be identical. Similarly, functional features of the new and standard components can be compared to ensure there is a match. Such attribute by attribute comparison can be performed for n attributes.

The comparison engine 2 is configured to repeat the attribute by attribute comparison for each of m (greater than 1) standard component specifications accessed from the standard specifications database 4. The standard components for inclusion in the comparison can be determined based on the classification. That is, a pre-filter of standard specifications for the comparison can be applied based on the classification.

The comparison engine 2 is configured to determine an interchangeability parameter or score based on equivalency of each of the n attributes. In various embodiments, the comparison engine 2 is configured to determine a list or report of viable or potential alternative components based on the interchangeability score. For example, all standard components having a sufficient interchangeability score may be included in the list or report of viable or potential alternative components. The comparison engine 2 is configured to output the list or report of viable alternatives to the simulation engine 6 so that an impact analysis can be performed for each alternative component. The comparison engine 2 is further configured to output the list or report of viable alternatives to the output generator 10 so that an output report thereof can be communicated to a user, e.g. an electronic report that can be printed or displayed.

Continuing to refer to figure 1, the simulation engine 6 is configured to determine an impact of the new component as compared to the alternative components in the list. The simulation engine 6 is in communication with one or more impact databases 8 such as a design database, a procurement database, a cost database, etc.. The one or more impact databases 8 provide information for the simulation engine 6 to determine the impact. The impact may be in the form of an impact score, which is determined based on a simulation of the new component and the standard component using various impact metrics from the impact database. That is, for each metric, an impact cost can be calculated corresponding to the impact of using the new component in the machine as compared to each of the alternative components. There will result an impact cost for each impact metric and for each standard and new component, which may be in the form of two-dimensional matrix. The impact costs for each of the new and the standard components can be summed or otherwise combined to provide an impact score for the new component and the alternative components, thereby allowing a ranking thereof.

In various embodiments, the simulation engine 6 is configured to calculate monetary cost of the new component as compared to the alternative components in the list. The cost calculation may be based on the cost per unit and the total number of units in the machine to be manufactured, e.g. an aircraft. The total number of units may be extract from the design database. The cost per unit for the alternative components may be ascertained from the cost database and the cost per unit for the new component may be ascertained from the electronic request.

In various embodiments, the simulation engine 6 is configured to calculate aircraft impact variables for the new component as compared to the alternative components. This may involve calculating weight differences between the new and standard components, volume differences and maximum dimension differences, for example. The air craft impact variables may be ascertained from the design database or from the standard specifications database 4.

In various embodiments, the simulation engine 6 is configured to take into account existing supply chain metrics. For example, a reliability factor for the supply of the alternative components, the number of alternative suppliers available, current volume of the alternative components, etc. Such information can be taken from the procurement database.

The simulation engine 6 is configured to output a result of the impact simulation. The output may be in the form of an electronic report 12, which may be displayed on a display unit of a user, printed or otherwise made available. The electronic report 12 may output a conclusion including a determination from the simulation engine 6 as to whether the standard component should be accepted. If the standard component should not be accepted, the electronic report may recommend one or more of the alternative components that are already standard components. The conclusion and the recommendation may be based on the combined impact score described above. The electronic report 12 may, alternatively, present a table of impact cost for each simulated impact metric (e.g. monetary cost, aircraft impact, procurement) and for each of the standard and alternative components. The electronic report 12 may be reviewed by an analyst in order to determine, based on accurate and pertinent data, whether to accept the new component as a standard component.

The output generator 10 may allow a user to accept the new component as a standard component. In an alternative, the simulation engine 6 may determine automatically acceptance of the new component as a standard component based on the impact simulation. A computer implemented database manager (not shown) may implement the addition of the new component, and integration of the specification thefor, into the standard specifications database 4 in response to the acceptance.

The simulation engine 6 and the comparison engine 2 may each comprise one or more processors (not shown) and one or more digital memory devices (not shown). The one or processors may be shared between the simulation and comparison engines 2, 6 or they may each have separate processors. The memory or memories may each store one or more programs for implementing the comparison and simulation described above, when executed by the one or more processors.

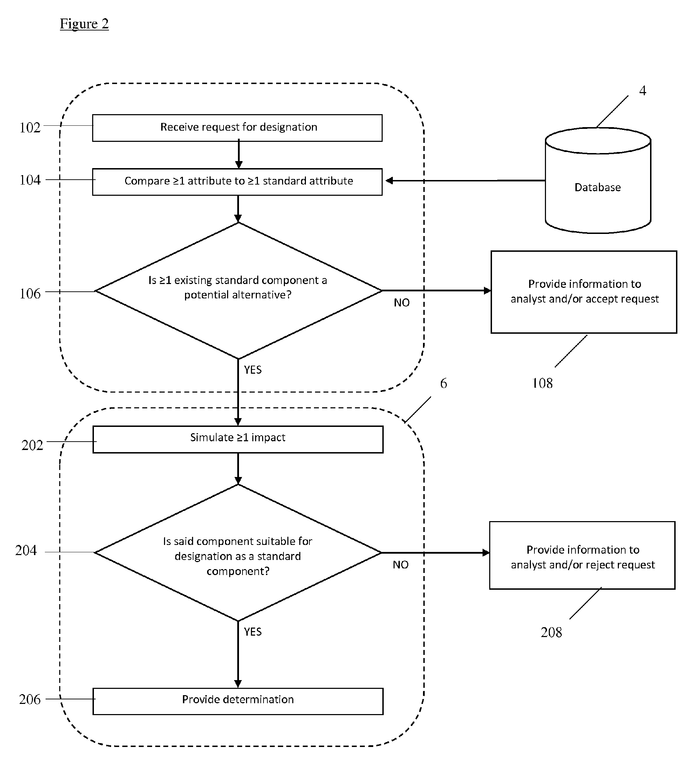

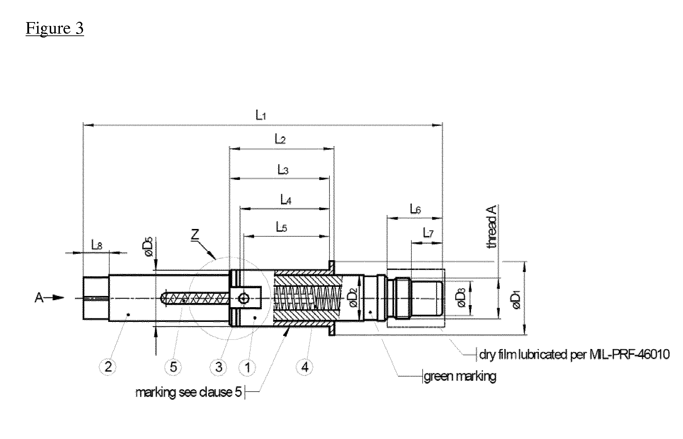

Referring to Figure 2, a process according to the present disclosure will be described. In step 102, a request for a component to be designated as a standard component is received by a computer-implemented comparison engine 2, which comprises software running on a computer resource (as described above). The request may have been sent by an external supplier or may have originated in-house (e.g. from within the company manufacturing a machine). The request comprises a specification (as described above), itself comprising a number of attributes which define properties of the component. In one example the component may be a bolt, the attributes of which may include length, diameter, material and material properties, mass, surface treatment type, tolerances, and price of the bolt. Figure 3 shows an engineering drawing of a bolt, the bolt labelled with a number of parameters including lengths L1 to L8 and outer diameters D1 to D5. The example of the component being a bolt will be used from hereon. However, it will be appreciated that the present process is applicable to all manner of components and the bolt example is in no way limiting on the scope of the present disclosure.

After receiving the request at step 102, the comparison engine 2 is configured to perform a comparison step 104 wherein at least one of the attributes of the requested bolt is compared to a respective attribute of at least one existing standard bolt whose corresponding specification is stored in the database 4 of existing components already designated standard components. In various embodiments, the comparison comprises determining any difference between the respective attributes. In various embodiments, the comparison includes carrying out an equivalency analysis, within which an attribute by attribute equivalency comparison is performed between the attributes of the component specification with corresponding attributes of the existing standard component. Using the example of the bolt, illustrated in Figure 3 as having lengths L1-L8 and outer diameters D1-D5, the equivalency analysis includes a determination of whether each length and/or outer diameter attribute of the bolt specification is within an equivalency tolerance of the corresponding length attribute L1-L8 and/or outer diameter attribute D1-D5 of the existing standard bolt. A number of other attributes may be compared in addition to or instead of length and diameter attributes, such as colour, density, material, function and surface treatment method.

The comparison step 104 includes comparing parameters representing the attribute, e.g. numerical values defining the dimensions of the bolt. The above described equivalency tolerance may be determined based on a numerical thresholding technique (e.g. upper and lower limit thresholds). For example, a threshold of 2.0mm may be set for L1, meaning that any bolt specification defining a bolt of length outside the range L1 ± 2.0mm may be considered outside the equivalency tolerance.

In step 106, a determination is made, via the computer implemented comparison engine 2, whether the existing bolt (or other standard designated component) is a potential alternative to the requested bolt based on the comparison. Here, a potential alternative is an existing bolt that has been determined by the comparison engine to be a viable alternative to the requested bolt. For example, an existing bolt falling within the equivalency tolerance requirements can be deemed a viable alternative.

Since any number of existing bolts in the database 4 may be compared to the requested bolt, a list of potential alternative bolts can be created. Assuming there are a plurality of existing bolts having specifications contained in the database, the comparison step may be performed for each of the plurality of existing standard bolts and the determining step 106 may then include generating a list containing a plurality of potential or viable alternatives to the requested bolt based on the comparison to each of the plurality of existing bolts. The list of potential alternatives may constitute standard bolts that are determined to be equivalents to the requested bolts based on the comparison: for example, each of the respective L1 attributes may fall within the aforementioned tolerance, and/or each bolt may have a particular density or be painted a particular color. One or more bolts in the list of possible alternatives may satisfy a number of these, or other, individual criteria. The list of potential alternatives may include a subset of existing standard bolts identified as having equivalent attributes to the requested bolt based on the comparison.

As described above, the equivalency analysis is used in the determination step 106, in which each standard bolt whose attributes were compared to the requested bolt is determined whether or not to satisfy a requirement of being an acceptable alternative bolt to the requested bolt. The determination may include any number of criteria to be satisfied, including satisfaction of predetermined tolerances such as dimensional tolerances and strength tolerances, and being made from the same materials or materials with similar physical properties such as tensile strength, elasticity, density, or temperature-related characteristics.

If no existing standard bolt satisfies the requirements, this information may be communicated to an analyst to make a consequent decision, or the requested bolt may be automatically accepted in a communication step 108. The communication step may be executed through the output generator 10, such as via one or more reports 12.

If an existing standard bolt satisfies the equivalency requirements, information about the requested bolt and any existing standard bolt determined to satisfy the above-described requirements is sent to a computer-implemented simulation engine 6 (such as in a form comprising the above described list), which comprises software running on a computer resource. The simulation engine 6 is configured to carry out a simulation step 202, during which it calculates impacts associated with implementing the requested bolt and the existing standard bolts satisfying the above-described requirement.

For example, if the total number of bolts to be used on an aircraft is known (such as through the one or more impact databases 8 including the design database), then the masses of both the requested bolt and each existing standard bolt (information ascertained from the electronic request and the standard specifications database 4) can be directly compared and a total mass difference calculated, the total mass difference being one impact value out of an arbitrary number of impact values associated with the implementation that can be passed to a subsequent determination step 204. Similarly, dimensional related impacts and cost impacts can be determined. The cost impact can also take into account the total number of units in the machine being manufactured (as determinable from the designs database) and the cost per unit (as determinable from the electronic request and the cost database). Similar calculations can be performed for the dimensional factors, such as by taking into account the volume per unit for the new and the standard components.

Furthermore, procurement costs (ascertained from the one or more impact databases 8 including the procurement database) associated with new components can be included in the simulation step 202, thereby providing a means of generating a measure of bias against inclusion of new components as standard components, which enables a procurement impact score to be simulated and included in the subsequent determination step 204. The impact calculation may further include the taking into account of metrics proportional to supply chain reliability, alternate supplier availability, supply chain purchase volume, scale-up capability, supply chain risks and criticality associated with the requested bolt. The metrics may be extracted from the impact databases 8 including the procurement database. The impact so simulated may also be provided as an output and/or used automatically to reject the request, as indicated at step (208).

In determination step 204, the simulation engine 6 may be configured to determine whether to designate the requested bolt as a standard bolt based on the impact simulated in step 202, and to output this determination. Alternatively, the simulation engine 6 may be configured to generate an output comprising results of the comparison step and/or the simulation step for examination by an analyst, who then makes a final determination of whether to add the requested bolt to the database based on the results. Alternatively, the simulation engine 6 may pass the output to an output generator 10, which may comprise software running on a computer resource, which is configured to generate a report 12 containing information such as the list of possible alternative bolts, their interchangeability scores and their respective impact scores. All of these possible outputs can be performed through the output generator 10.

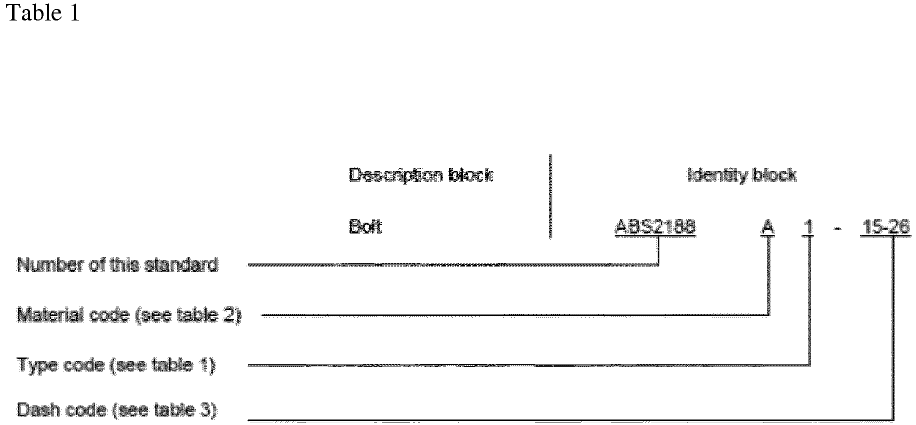

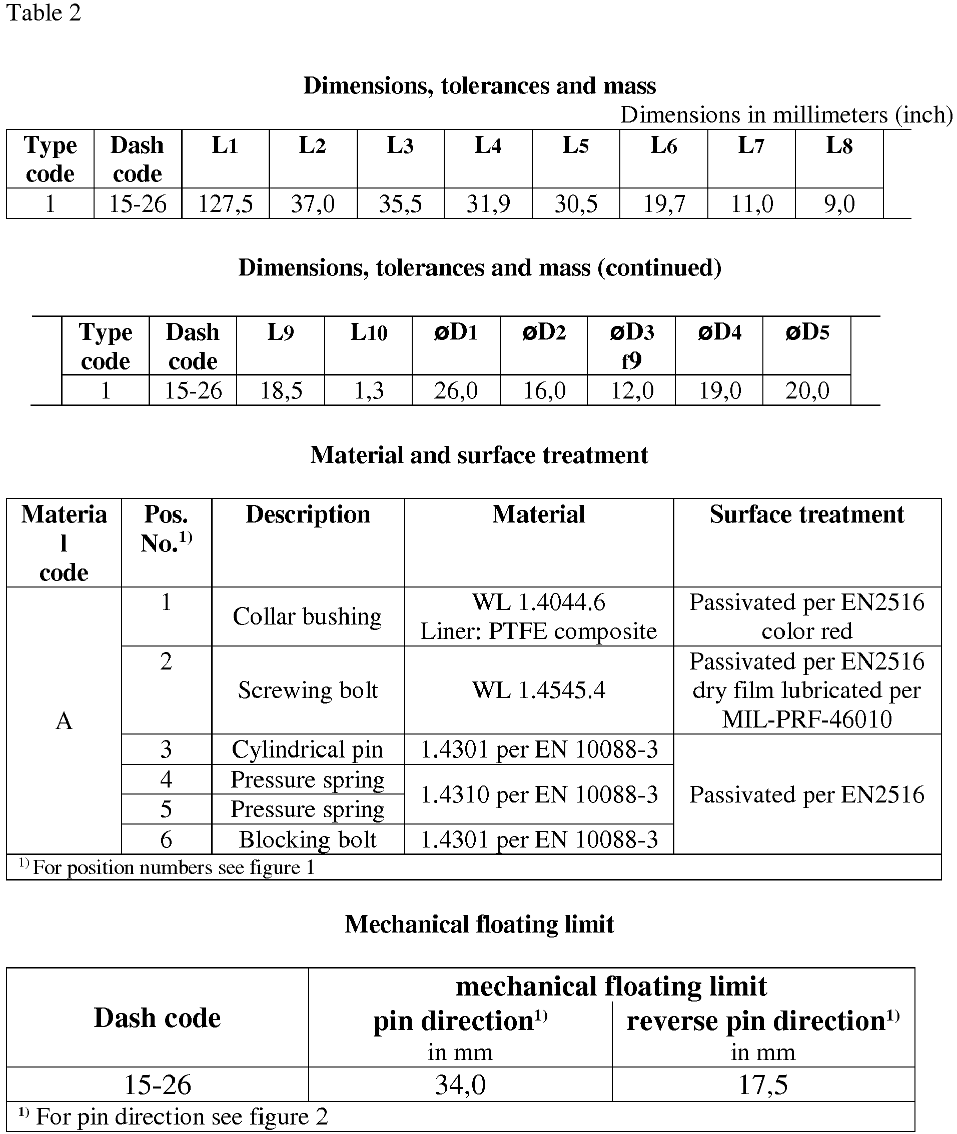

Referring to Tables 1 and 2 and Figure 3, the component type ABS2188 (screwing bolt) is described with the help of the three attributes material, dimensions, and mechanical floating limit. The specification in Table 2 also captures the actual list of standard components of type ABS2188.

A new screwing bolt that a supplier or designer presents for designation as a standard component would have different attributes, for example a different dimension or material, and if it were accepted to be included into the database 4, the ABS2188 specification would be updated with the necessary designation for capturing the new component's attributes.

There is a very large number of component types or classifications, including nut and bolt, bonding agent, paint, etc to make a given machine such as an aircraft. Every component is required to have a standard specification which clearly specifies its attributes, and every type of component has a generic set of attributes that are used to describe it.

According to the present disclosure, a company can be more systematic in evaluating proposals from suppliers to incorporate components that are not part of the database (300) with the company, thereby making the management of components in the manufacturing and maintenance process chain more efficient.

It will be appreciated by persons skilled in the art that the above embodiment has been described by way of example only and not in any limitative sense, and that various alternation and modifications are possible without departure from the scope of the appended claims.

## Claims

1. A method of determining the suitability of a component of a machine for designation as a standard component of said machine, the method comprising the steps of:
receiving a request for designation of a component as a standard component, the request comprising a component specification defining at least one attribute of the component;
comparing at least one said attribute to a respective at least one attribute of at least one existing standard component defined by a respective standard specification stored in a database;
determining whether at least one said existing standard component is a potential alternative to said component based on said comparison;
simulating at least one impact relating to an implementation of said component and an implementation of at least one said existing standard component in response to said existing standard component being determined to be a potential alternative ; and
determining whether said component is suitable for designation as a standard component based on said comparison and/or at least one said impact.

2. A method according to claim 1, wherein said comparison is only performed when said component and said at least one existing standard component share at least one classification.

3. A method according to either of claims 1 and 2, wherein said comparison comprises a determination of a difference between at least one component attribute and at least one corresponding existing standard component attribute.

4. A method according to claim 1, 2 or 3, wherein at least one impact comprises at least one impact score based on a difference between at least one component attribute and at least one corresponding existing standard component attribute.

5. A method according to any one of the preceding claims, further comprising the step of generating a report comprising at least one said potential alternative and/or at least one said impact and/or at least one said determination of suitability.

6. A method according to any one of the preceding claims, wherein said simulation comprises procurement costs associated with said component and/or said existing standard component.

7. A method according to any one of the preceding claims, wherein at least one attribute defines at least one of the following: dimension; density; mass; volume; tolerance; material type; material property; surface treatment; pin type; and colour.

8. A method according to any one of the preceding claims, wherein said machine is an aircraft.

9. A system for determining the suitability of a component of a machine for designation as a standard component of said machine, the system comprising:
a database comprising at least one standard specification defining at least one attribute of at least one respective existing standard component;
a computer-implemented comparison engine configured to carry out the steps of:
receiving a request for designation of a component as a standard component, the request comprising a component specification defining at least one attribute of the component;
comparing at least one said attribute to a respective at least one attribute of at least one existing standard component defined by a respective standard specification stored in a database;
determining whether at least one said existing standard component is a potential alternative to said component based on said comparison;
a computer-implemented simulation engine configured to carry out the step of:
simulating at least one impact relating to an implementation of said component and an implementation of at least one said existing standard component in response to said existing standard component being determined to be a potential alternative.
an output generator configured to output a result of said comparing and/or said simulating to allow determination of whether said component is suitable for designation as a standard component based on said comparison and/or at least one said impact.

10. A system according to claim 9, wherein said computer-implemented comparison engine is further configured to perform said comparison only when said component and said at least one existing standard component share at least one classification.

11. A system according to either of claims 9 and 10, wherein said comparison comprises a determination of a difference between at least one component attribute and at least one corresponding existing standard component attribute.

12. A system according claim 9, 10 or 11, wherein at least one impact comprises at least one impact score based on said difference a difference between at least one component attribute and at least one corresponding existing standard component attribute.

13. A system according to any one of claims 9 to 12, wherein said output generator is further configured to generate a report comprising at least one said potential alternative and/or at least one said impact and/or at least one said determination of suitability.

14. A system according to any one of claims 9 to 13, wherein said simulation comprises procurement costs associated with said component and/or said existing standard component.

15. A system according to any one of claims 9 to 14, wherein at least one attribute defines at least one of the following: dimension; density; mass; volume; tolerance; material type; material property; surface treatment; pin type; and colour.
